# EUROPEAN PATENT APPLICATION

(11) **EP 2 037 421 A1**
(43) Date of publication of application: **18.03.2009**
(21) Application number: 08163650.8
(22) Date of filing: 04.09.2008
(51) Int. Cl.: G07C 9/00

(54) **Method and apparatus for controlling access and presence information using ear biometrics**

(30) Priority: 05.09.2007 US 899326
(71) Applicant: Avaya Inc., Basking Ridge, New Jersey 07920 (US)
(72) Inventor: Coughlan, Marc William Joseph, Balmain, NSW 2041 (AU); Forbes, Alexander Quentin, Westleigh, NSW 2120 (AU); Gannon, Ciaran, Killara, NSW 2071 (AU); Michaelis, Paul Roller, Louisville, CO 80027 (US); Runcie, Peter Donald, Bilgola Plateau, NSW 2107 (AU); Warta, Ralph, Gladesville, NSW 2111 (AU)
(74) Representative: Williams, David John

(57) **Abstract**

A method and apparatus control the operations of an audio device by obtaining by the audio device biometric information about an ear of a user; identifying the user by processing the biometric information; and controlling the operation of the audio device in response to the identification of the user. Also, a method and apparatus control the operations of an external database by receiving biometric information about the ear of a user from an audio device; identifying the user by processing the biometric information; and transmitting a control message to another system.

## Description

### Technical Field

This invention relates to controlling access to a communication system and providing presence information to the communication system, and in particular, to the use of ear biometrics to determine an identification of an individual.

### Background of the Invention

Within the prior art, a well known problem is to identify the user of a telecommunication device such as a telephone, cellular telephone, or a personal computer being used for the communication of voice information via the IP telephony. The solution in the prior art has been to assume that the user of the telecommunication device is the person assigned to the telecommunication device for purposes of caller ID. Clearly, this is not always true. In addition, it is known within the prior art with respect to conferencing systems to utilize voice identification of users. The problem with this system is that the user has to speak before they are identified.

In presence systems, it is important to identify the user. It can be performed by assuming that the user is the person assigned to the telecommunication device which may not be the case.

With respect to cellular telephones or mobile telephones, a well known problem is to prevent an unauthorized user from making telephone calls on these telephones. The problem is particularly acute for cellular and mobile telephones because they are easily lost or stolen. If a cellular or mobile telephone is lost or stolen, there is always the possibility of fraudulent use or identity theft. The prior art has attempted to resolve this problem by utilizing password protection which does not work well since most users do not want to be bothered by having to enter a password each time they wish to start communication.

### Summary of the Invention

A method and apparatus control the operations of an audio device by obtaining by the audio device biometric information about an ear of a user; identifying the user by processing the biometric information; and controlling the operation of the audio device in response to the identification of the user.

A method and apparatus control the operations of an external database by receiving biometric information about the ear of a user from an audio device; identifying the user by processing the biometric information; and transmitting a control message to another system.

A method and apparatus control the operations of a telecommunication system by receiving biometric information about an ear of a user from a telecommunication set; identifying the user by processing the biometric information; and controlling the operation of the telecommunication system in response to the identification of the user.

### Brief Description of the Drawling

Figure 1 illustrates an embodiment for identifying individuals where an identification database is stored within a telecommunication device;

Figure 2 illustrates an embodiment for identifying individuals where an identification database is stored external to a telecommunication device;

Figure 3 illustrates, in block diagram form, an embodiment of a telephone that utilizes visual techniques for identifying individuals;

Figure 4 illustrates, in block diagram form, an embodiment of a telephone that utilizes sonic techniques for identifying individuals;

Figure 5 illustrates, in block diagram form, a computer that may be utilized in Figures 3 and 4;

Figure 6 illustrates, in flowchart form, operations 600 that are performed by the embodiment illustrated in Figure 3 that utilizes visual techniques for identifying individuals;

Figure 7 illustrates, in flowchart form, operations 700 that are performed by the embodiment illustrated in Figure 4 for that utilizes sonic techniques for identifying individuals;

Figure 8 illustrates, in flowchart form, operations 800 that are performed by an embodiment to train a telephone for utilization of the visual techniques for identification of individuals;

Figure 9 illustrates, in flowchart form, operations 900 that are performed by an embodiment to train a telephone for utilization of the sonic techniques for identification of individuals;

Figure 10 illustrates, in flow chart form, the operations performed by a telephone upon identification of an individual;

Figure 11 illustrates, in flowchart form, operations 1100 that are performed by an external identification database;

Figure 12 illustrates, in block diagram form, a telecommunication system; and

Figure 13 illustrates, in flowchart form, operations 1300 that are performed by a telecommunication system.

### Detailed Description

An embodiment uses ear biometrics to identify an individual being engaged in a telephone conversation. The embodiment may utilize visual or sonic techniques for the identification, or it may use a combination of these. The telephone obtains ear biometrics and determines the identity of the individual by comparing the obtain ear biometrics with data stored in an internal database of the telephone. The telephone may be a wired telephone or a wireless telephone such as a mobile telephone, cellular telephone, a cordless telephone, twoway radio, personal digital assistant (PDA), or any handheld audio device. In addition, the telephone is capable of using various media such as, but not limited, to video and audio. The wired telephone may be connected to the Public Switched Telephone Network (PSTN) or a private telephone exchange by a physical wire or may utilize a connection via a data switching network such as the Internet.

In another embodiment, the telephone uses the identification of the individual to determine if the individual will be allowed to use the telephone. If the individual is not designated as an individual who is authorized to use the telephone, the telephone will not allow use by that individual.

In another embodiment, the telephone transmits the identification of the individual to an endpoint of the communication in which the telephone is presently engaged. The determination of the identity of the individual and transmission of that identification may be done on a periodic basis to the endpoint. This allows the endpoint to continuously receive the identification of the user of the telephone.

When the endpoint is a conferencing system, the periodic transmission of identification allows the conferencing system to display to all other participants the identity of the user even if the telephone should be handed to a second user during the conference call. Further, if the endpoint is a voice messaging system, the identity of the individual can be utilized to allow the user to access the user's voice messages.

In another embodiment, the telephone may also transmit the identification of the user to a presence system. Note, the telephone may transmit the identification to a connected telecommunication switching system which in turn will transmit the identification to the presence system.

In another embodiment, the obtained ear biometric information obtained by the telephone is transmitted by the telephone to an external system that utilizes an external identification database to identify the individual. If the external system is a wired or wireless telecommunication switching system, the external system may use the identification information to allow or block a call from the telephone. In addition, the external system may utilize the identification information to be transmitted as caller identification information to an endpoint. For example, if the external system is interconnecting the telephone to a conferencing system, the external system will continuously transmit the identification information as caller ID information to the conferencing system so that the conferencing system can display the correct identity of the user.

In another embodiment, an external system such as a wired or wireless telecommunication switching system may utilize the identification information for billing the user of the telephone even though the user may not be utilizing the telephone to which they have been assigned. In addition, in situations where users are randomly assigned telephones on a daily basis, the external system will utilize the identification information to not only identify the user but also to direct incoming telephone calls to that user after the ear biometrics information has been obtain. Further, if a different user is identified as using the telephone during a telephone call, the external system may terminate the telephone call to assure privacy.

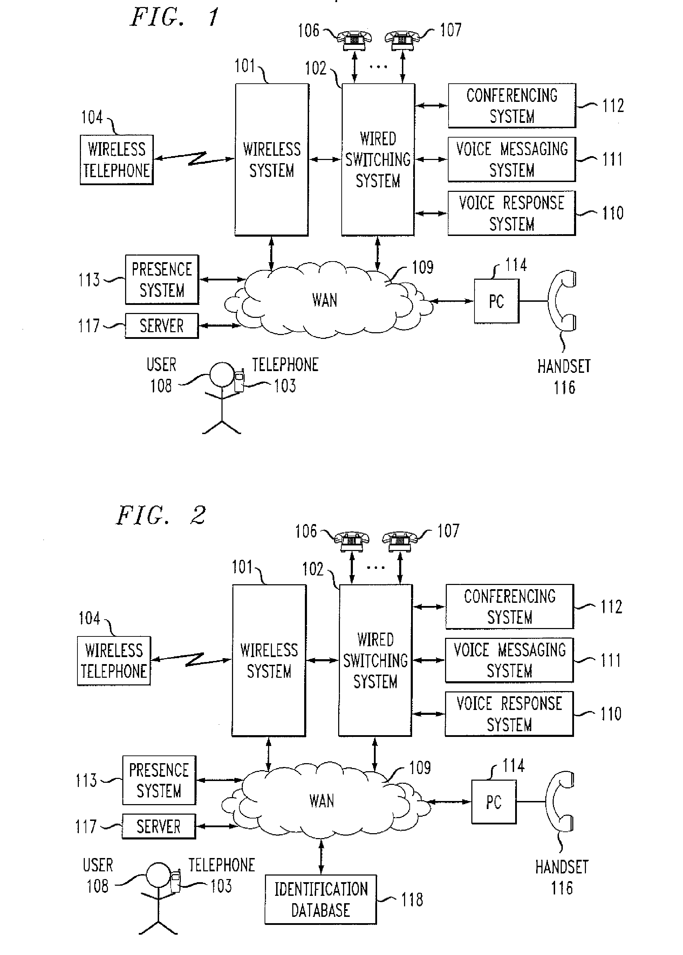

Figure 1 illustrates an embodiment for the identification of individuals where the identification database is stored within the telephone such as telephone 103. Telephone 103 is utilized to describe the operations of the embodiment illustrated in Figure 1; however, the other telephones 104-107 and PC 114 with handset 116 may perform the same type of operations. Telephone 103 may be connected to wireless system 101, PSTN 102, or WAN 109; hence, telephone 103 may be a wireless, wired, or VoIP telephone. WAN 109 may be any data switching network such as the Internet. Note, one skilled in the art would immediately recognize that if telephone 103 is a wired telephone the portion of telephone 103 illustrated in Figure 1 may be only the handset portion of telephone 103.

Presence system 113 is illustrated as being interconnected to wireless system 101 and wired switching system 102 via WAN 109. One skilled in the art would realize that presence system 113 could be incorporated into any of these other systems or could be interconnected to them via other paths. The utilization of presence systems is well known in the art.

Conferencing system 112, voice response system 110, and voice messaging system 111 are illustrated as being connected to wired switching system 102. One skilled in the art would realize that these systems could be interconnected to wireless system 101 and presence system 113 via WAN 109 or that wireless system 101 or wired system 102 could incorporate the functions of voice response system 110, conferencing system 112, and voice messaging system 111 internally.

Server 117 can perform a number of different functions. One of those functions is to provide the routing information for telecommunication calls from PC 114 to other telecommunication devices such as telephone 103.

Identification information from a telephone such as telephone 103 can be communicated to systems 110-113 via the switching system to which telephone 103 is interconnected such as WAN 109, wireless system 101, or wired switching system 102 depending on the type of telephone that telephone 103 is.

If the embodiment is utilizing visual techniques to identify the individual using ear biometrics, upon an incoming or outgoing call being actuated, telephone 103 utilizes its imaging capabilities to identify the individual by identifying the individuals ear as telephone 103 is moved to the ear. To determine when telephone 103 has reached the ear, telephone 103 may utilize visual, heat, or acceleration techniques. Audio techniques may also be used; for example, it may be assumed that the telephone 103 has reached the user's ear when the user is heard to speak into the mouthpiece. Telephone 103 identifies the individual by utilizing the obtained ear biometrirs information to determine the individual from an internal database stored within telephone 103.

If the embodiment is utilizing sonic technique to identify an ear (as opposed to using audio techniques to initiate the identification process), upon an incoming or outgoing call being actuated, telephone 103 waits until telephone 103 reaches the ear before utilizing the sonic technique to identify the ear. To determine when telephone 103 has reached the ear, telephone 103 may utilize sonic, visual, heat, or acceleration techniques. Telephone 103 identifies the individual by utilizing the obtained ear biometric information to determine the individual from an internal database stored within telephone 103. Telephone 103 also periodically performs the identification operations.

The embodiment of Figure 2 is the same as the embodiment of Figure 1 except that the identification databases are not maintained within the individual telephones such as telephone 103 but rather the identification information is maintained in an external database such as identification database 118. One skilled in the art would realize that identification database 118 could be incorporated into wireless system 101 or wired switching system 102. In addition, identification database 118 could interconnect to wireless system 101 and wired switching system 102 via other interconnection mechanisms than WAN 109.

When a telephone such as telephone 103 has obtained the 3-D images or sonic information for the present user, the telephone transmits this information to identification database 118 which determines the identification of the user. (The telephone may also transmit only 2-D images to the identification database 118 for processing.) Note, that identification database 118 can transmit this information to wireless system 101, or wired switching system 102, or presence system 113 if requested to do so on a periodic basis. Further, identification database 118 can be an integral part of either system 101 or 102.

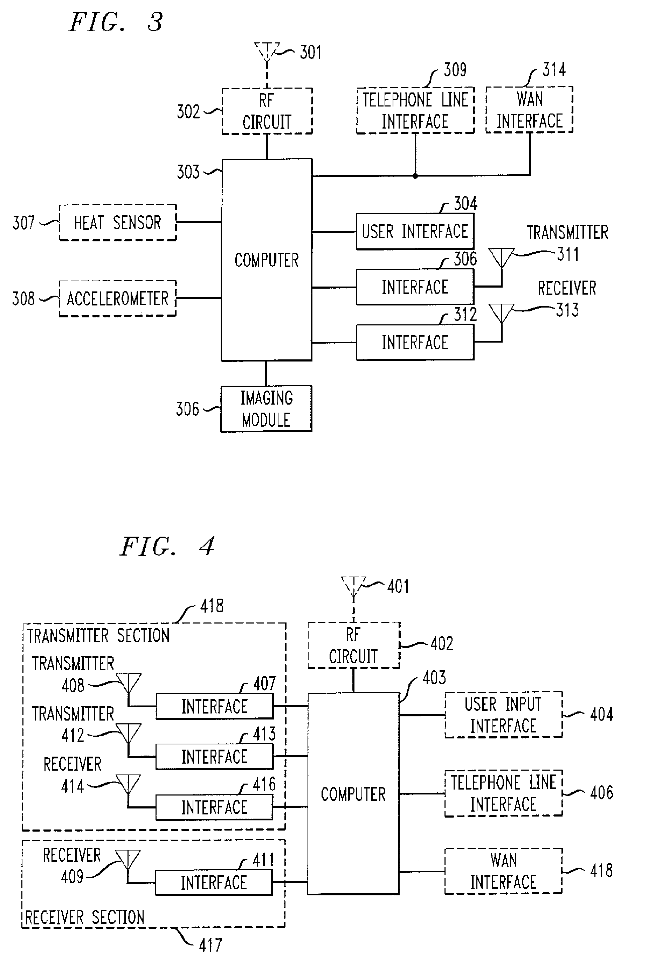

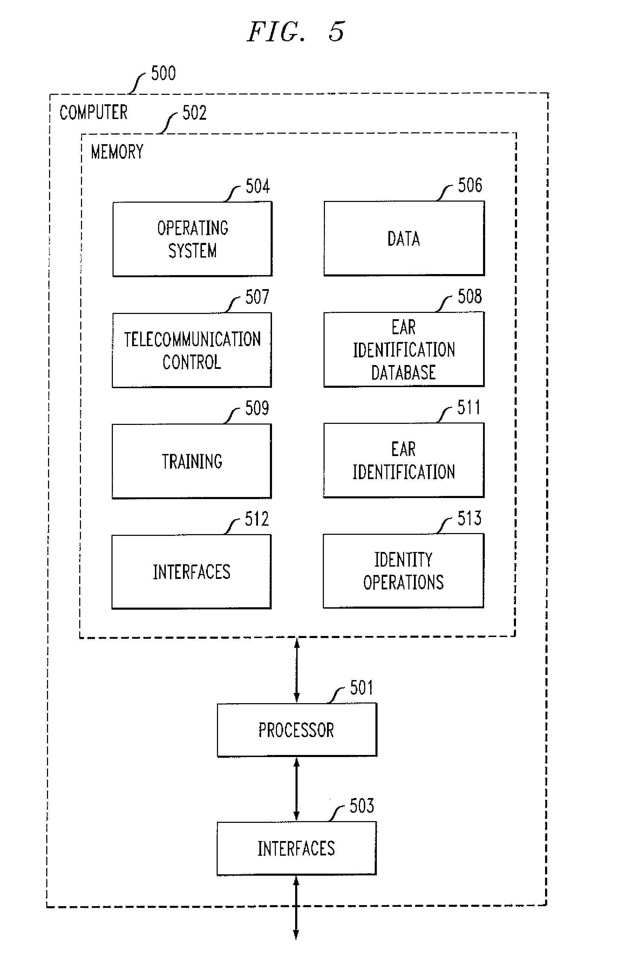

Figure 3 illustrates, in block diagram form, a telephone that utilizes visual techniques for determining individual identity using ear biometric information. Computer 303, which is shown in greater detail in Figure 5, controls the operations of the telephone. If the telephone is a wireless telephone, it has blocks 301 and 302; if the telephone is a wired telephone, it has block 309; but if the telephone is a VolP telephone it has block 314. **lf** a wireless telephone, computer 303 controls RF circuit 302 for the transmission and reception of wireless signals both for audio information and control information. RF circuit 302 transmits and receives RF signals via antenna 301. **lf** the telephone is a wired telephone, computer 303 controls telephone line interface 309. If the telephone is a VoIP telephone, computer 303 controls WAN interface 314. User interface 304 provides the functions of transmitting visual information to the user and receiving key and button actuation information from the user. User interface 304 is under control of computer 303. Imaging module 308 allows computer 303 to receive visual information. The telephone may have heat sensor 307 for detecting proximity to the ear using the heat from the ear. In addition, the telephone may have accelerometer 308 for determining when the telephone has reached the ear or is in motion.

Imaging module 308 includes but is not limited to lenses, lense(s) focusing mechanism, image capturing circuitry, and a light source for illuminating ears. Computer 303 processes the raw image information received from imaging module 308 into usable visual information and performs the analysis necessary to identify individuals by the identity of their ears. By utilizing digital camera techniques well known to those skilled in the art, computer 303 can use imaging module 308 to determine movement and acceleration by examining a sequence of pictures.

Computer 303 receives audio information from the user via receiver 313 and interface 212. Computer 303 transmits audio information to the user via transmitter 311 and interface 309.

In operation, computer 303 utilizes imaging module 306 in the following manner to identify the individual by identifying the ear of the user the telephone has been placed in proximity. When computer 303 detects that the telephone is in motion, computer 303 instructs imaging module 306 to take a sequence of pictures which are 2-D images. Computer 303 will also monitor the amount of light available and enable the light source of imaging module 306 if necessary. Computer 303 also controls the focusing of the lenses of imaging module 306. Computer 303 then generates 3-D images from the 2-D images being gathered from imaging module 306. Computer 303 may also only utilize 2-D images.

Computer 303 then utilizes an internal identification database to identify the individual. The ear identification database contains ear identification information of the individuals who have trained the telephone to recognize their ears. The identification database may be stored within computer 303 or may be stored external to computer 303. If the database is stored internally, based on the information obtained from the database, computer 303 can identify which ear (left or right) and identify the individual whose ear it is. If the database is stored externally, computer 303 transmits the 3-D images to an external database which will determine the identity of the individual. The operations of generating the 3D images from the 2D images and obtaining identification from a database with the 3D images is described in U.S. Patent No. 7,065,232 and U.S. Patent Application No. 2006/0140453. The databases set forth in the above patent and patent application are replaced by the ear identification database that is assembled by training the telephone for specified individuals.

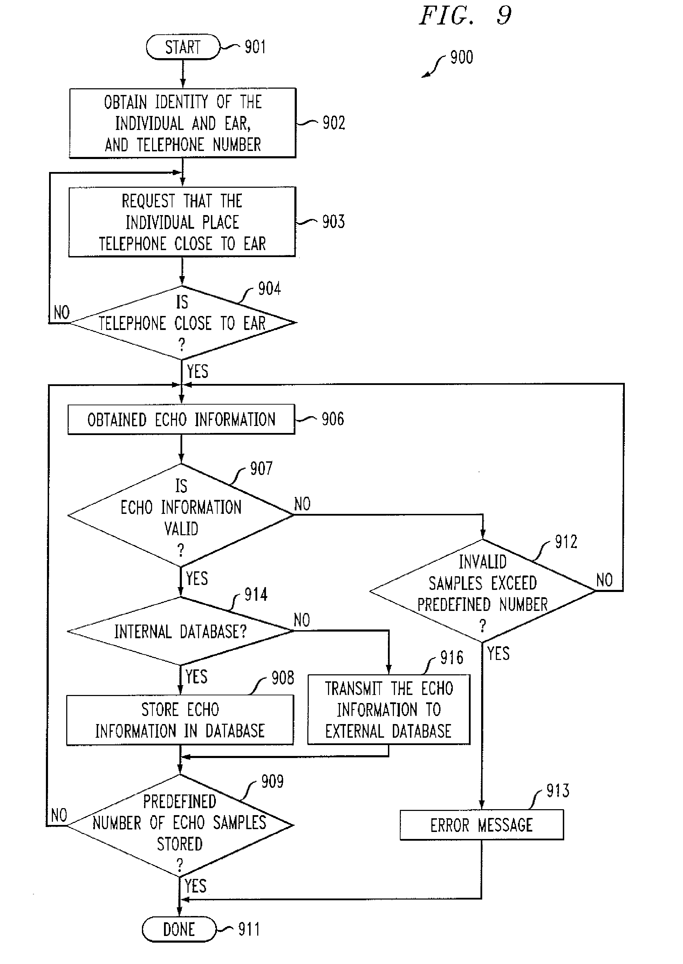

Figure 4 illustrates, in block diagram form, a telephone that utilizes sonic techniques for determining ear information. If present, blocks 401 and 402 provide the same functions as described for blocks 301 and 302 of Figure 3 but under control of computer 403 which is shown in greater detail in Figure 9. lf present, blocks 406 and 418 provide the same functions as described for blocks 309 and 314 of Figure 3 but under control of computer 403. User input interface 404 provides the same functions as user interface 304 of Figure 3.

Transmitter section 418 comprises the physical part of the telephone that the user associates with the transmitter of the telephone, and receiver section 417 comprises the physical part of the telephone that the user associates with the receiver of the telephone. Computer 403 uses transmitter 408 and interface 407 of transmitter section 408 to transmit voice information and other audible signals to the user. However, computer 403 also utilizes transmitter 412 and interface 413 of transmitter section 418 to transmit ultrasonic frequencies to the ear of the user for the determination of resonant frequencies of the ear of the user. Computer 403 uses receiver 414 and interface 416 of transmitter section 418 to receive the information returned by the ear of the user in response to the ultrasonic frequencies so as to determine the resonant frequencies of the ear of the user. Computer 403 uses receiver 409 and interface 411 of receiver section 417 to receive voice information from the user.

During individual identification by the telephone, computer 403 uses transmitter 412 and interface 413 to produce signals whose frequencies are in the ultrasonic range which may be within the range of 20 kHz to 60 kHz but is not limited to this particular range and one skilled in the art could readily envision utilizing a range of other frequencies. Such frequencies are not heard by people; hence, audio information at these frequencies will not interfere with telephone conversations. The ear canal of the user is responsive to these frequencies to resonate at different ones of the frequencies. Receiver 414 and interface 416 receive the echoes (also referred to as reflected signals) that are coming back from the ear, and computer 403 utilizes the echoes to determine the frequencies at which the ear canal is resonant or non-resonant (180° out of phase with a given frequency).

If the identification database is stored within computer 403, computer 403 then utilizes the identification database to identify the ear (left or right) and identify the user using the echo information (also referred to as reflected signals). The database is established by all of the users who will utilize the telephone thereby training the telephone with respect to their ears. If the identification database is external to computer 403, computer 403 then transmits the echo information to the external database which identifies the individual.

Figure 5 illustrates, in block diagram form, computer 500 which may be computer 303 of Figure 3 or computer 403 of Figure 4. In Figure 3, devices 302, 304, 306, 307 and 308 are connected to interfaces 503 in a manner well known to those skilled in the art. In Figure 4, devices 402, 404, 406, 418, and 417 are connected to interfaces 503 also in a manner well known to those skilled in the art. Processor 501 controls these devices via interfaces 503 by executing routines stored in memory 502.

Interfaces routine 512 is executed by processor 501 to directly control the above noted devices via interfaces 503 based on decisions made by the other routines stored in memory 502.

Operating system 504 provides the overall control of computer 500 utilizing information stored in data 506.

Telecommunication control routine 507 controls the normal telecommunication operations of a telephone utilizing interfaces routine 512 and information stored in data 506.

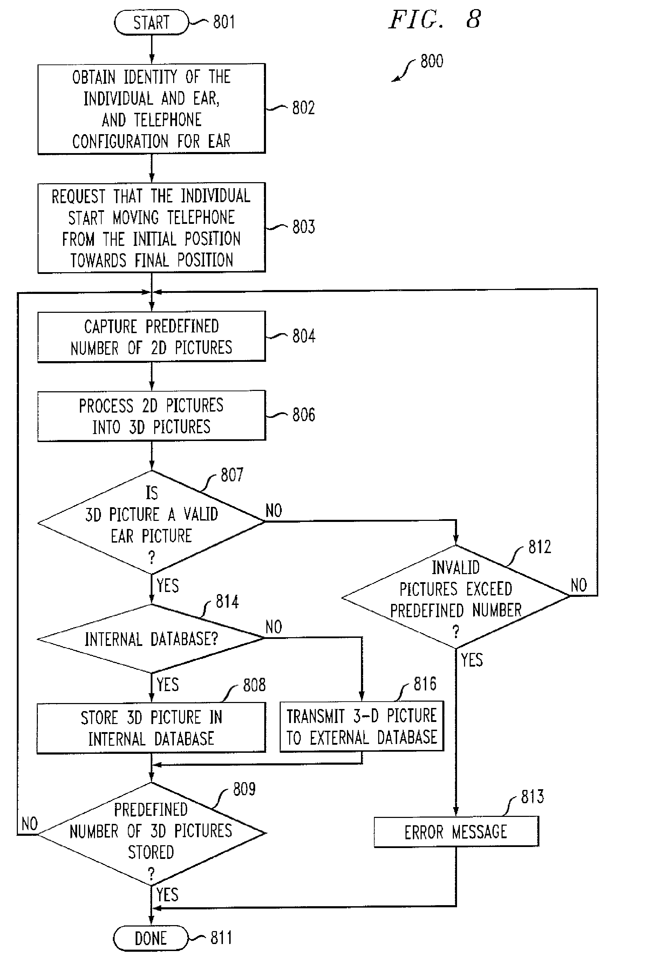

The training operations as described in Figure 8 or Figure 9 are performed by training routine 509. Training routine 509 stores the identification of ears and individuals in ear identification database 508 or transmits the identification information and 3-D images or echo information to an external database. One skilled in the art would realize that the information stored in the external database could be gathered by other means other than the training operations described in Figures 8 or 9. For example, the 3-D images could be obtained by the use of dedicated cameras. The echo information could also be obtained by using audio equipment other than telephones.

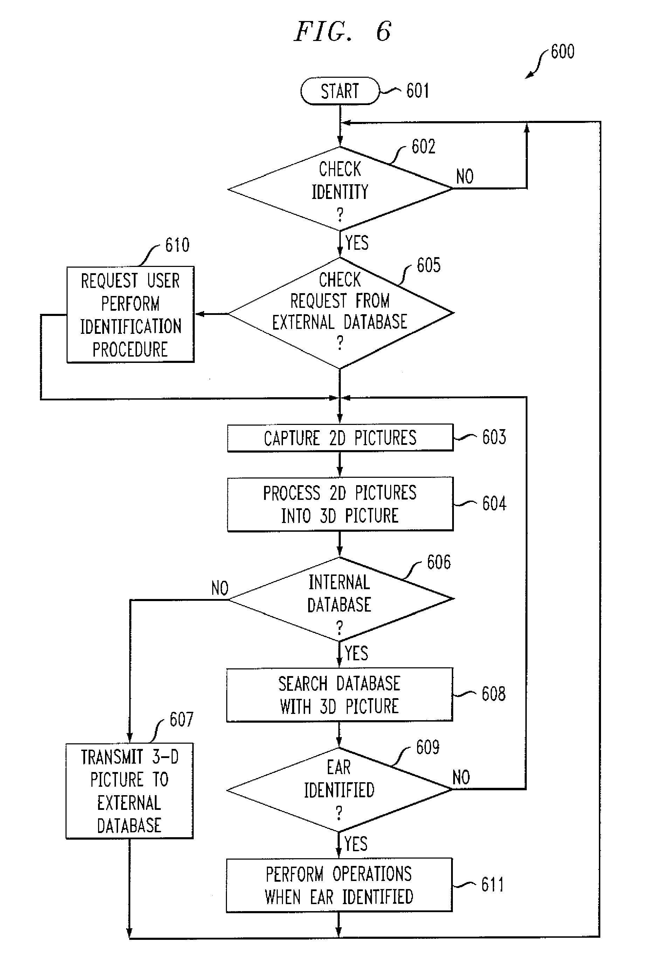

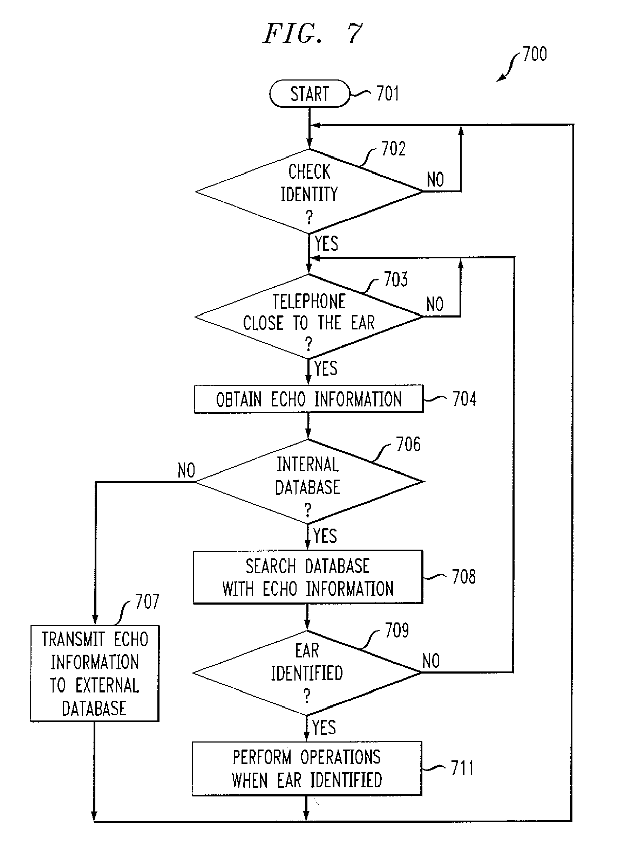

Ear identification routine 511 performs the operations as described with respect to Figure 6 or Figure 7. Ear identification routine 511 utilizes the data stored in the ear identification database 508 to identify individuals. If the individual identification is being performed by an external system, routine 511 will not be present in memory 502.

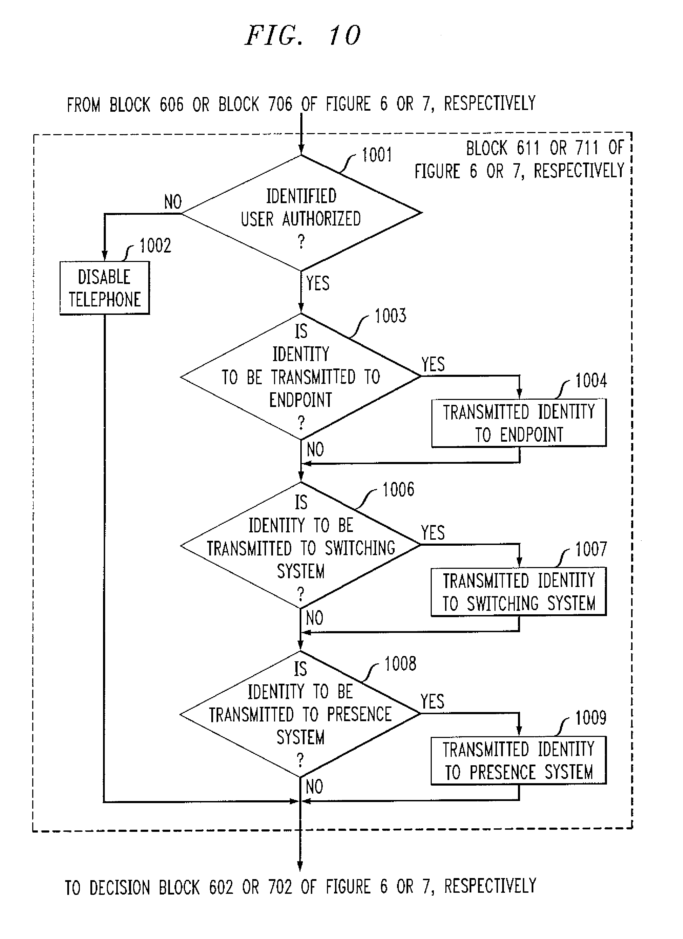

Identity operations 513 perform operations once the individual using the telephone has been identified as is described with respect to Figure 10.

Figure 6 illustrates, in flowchart form, operations 600 that are performed by the embodiment illustrated in Figure 3 for utilizing visual techniques for identifying individuals. After being started in block 601, decision block 602 determines if it is time to check the identification of the user of the telephone. If the answer is no in decision block 602, decision block 602 is re-executed. If the answer is yes in decision block 602, control is transferred to decision block 605. The determination of whether it is time to check the identity of the user may be determined by the fact that there is an incoming or outgoing call. Further the determination may be made because the telephone is moving to another ear during a call. Note, even if the ear has not changed, decision block 602 may periodically request that blocks 605-611 be executed. If the external database could not find a match for the 3-D picture transmitted in block 607, the external database may request that the identity be checked again which is performed by decision block 605 and block 610. The external database would request the identity be checked to verify that the 2-D and 3-D images had been correctly gathered by the telephone to avoid misidentification or no identification being caused by the movements of the user creating incorrect images.

After receiving control from decision block 602, decision block 605 determines if the request is from the external database. Such a request would only be made if the database was unable to identify the individual based on information transmitted to it by block 607. If the answer is no in decision block 605, control is transferred to block 603. If the answer is yes in decision block 605, block 610 requests that the user perform the identification procedure so that the 2-D images can start to be obtained of the ear in block 603. After execution of block 610, control is transferred to block 603.

Block 603 captures 2-D images utilizing imaging module 306 and computer 303 of Figure 3. Then, block 604 processes the 2-D images into a 3-D image before transferring control to decision block 606. Note, if only 2-D images are being utilized, block 604 will not be present.

Decision block 606 determines if the identification database is stored within the telephone or stored externally. If the identification database is stored internally, controls is transferred to block 608 which uses the resulting 3-D image to search the internal identification database that contains the identification information of the ears of the users of the telephone. After execution of block 608, control is transferred to decision block 609. The latter decision block determines if the search of the database in block 608 has identified an ear. If the answer is no, control is transferred back to block 603. If the answer is yes in decision block 609, block 611 performs the operations that are to be performed by various embodiments when an individual is identified by the identification of the individual's ear before returning control back to decision block 602.

Returning to decision block 606, if an external database is being utilized, control is transferred to block 607 which transmits the 3-D picture to the external database before returning control back to decision block 602.

Figure 7 illustrates, in flowchart form, operations 700 that are performed by the embodiment illustrated in Figure 4 for utilizing sonic techniques for identifying individuals. After being started in block 701, decision block 702 determines if it is time to check the identification of the user of the telephone. If the answer is no in decision block 702, decision block 702 is re-executed. If the answer is yes in decision block 702, control is transferred to block 703. The determination of whether it is time to check the identity of the user may be determined by the fact that there is an incoming or outgoing call. Further the determination may be made on a periodic basis during a telephone call. In addition, an external database request that the user identification be checked. For example, if the external database could not find a match for the echo information transmitted in block 707, the external database may request that the identity be checked again.

Decision block 703 determines if the telephone is close to the ear of the user. This is a necessity for the transmission of the ultrasonic signals. If the answer in decision block 703 is no, decision block 703 is re-executed. If the answer in decision block 703 is yes, control is transferred to block 704.

Block 704 transmits the ultrasonic frequencies into the ear canal and processes the returned reflections which are referred to as the echo information before transferring control to decision block 706.

Decision block 706 determines if the identification database is stored within the telephone or stored externally. If the identification database is stored internally, control is transferred to block 708 which uses the resulting echo information to search the internal database that contains the identification information of the ears of the users of the telephone. After execution of block 708, control is transferred to decision block 709. The latter decision block determines if the search of the database in block 708 has identified an ear. If the answer is no, control is transferred back to block 703. If the answer is yes in decision block 709, block 711 performs the operations that are to be performed by various embodiments when an individual is identified by the identification of the individual's ear before returning control back to decision block 702.

Returning to decision block 706, if an external database is being utilized, control is transferred to block 707 which transmits the echo information to the external database before returning control back to decision block 702.

Figure 8 illustrates, in flowchart form, operations 800 that are performed by an embodiment to train a telephone for utilization of the visual technique for ear identification. After being started in block 801, block 802 obtains the identity of the individual and which ear is being tested. Note, there may be only one individual that is tested. In addition, block 802 obtains the telephone number. Computer 303 can use user interface 304 to obtain this information. Then, block 803 requests that the individual start moving the telephone from the initial position towards the final position which is when the telephone is against the ear.

As the movement starts, blocks 804-809 attempt to store a predefined number of 3-D images in the database for future use in identifying the ear and the individual. First, block 804 captures a predefined number of 2-D images, and block 806 processes these 2-D images into a 3-D image before transferring control to decision block 807.

Decision block 807 determines if the 3-D image is a valid ear picture since the telephone may be miss-pointed. If the answer is yes in decision block 807, control is transferred to decision block 814.

Decision block 814 determines if the database is internal or external to the telephone. If the database is external, control is transferred to block 816 which transmits the 3-D picture along with the identification of the individual (such as the name of the individual, personnel number of the individual, and telephone number, etc.) to the external database before transferring control to decision block 809.

If the answer in decision block 814 is that the database is internal, control is transferred to block 808. Block 808 stores the 3-D image in the ear identification database before transferring control to decision block 809.

Decision block 809 determines if a predefined number of 3-D images have already been stored in the identification database. If the answer is no, control is transferred back to block 804. If the answer in decision block 809 is yes, control is transferred to block 811 and the process is complete.

Returning to decision block 807, if the answer in decision block 807 is no, decision block 812 determines if the invalid number of pictures that have been taken by the telephone exceeds a predefined number. If the answer is no, control is transferred back to block 804. If the answer in decision block 812 is yes, control is transferred to block 813 which signals an error before transferring control to block 811.

Figure 9 illustrates, in flowchart form, operations 900 that are performed by an embodiment to train a telephone for utilization of the sonic technique for ear identification. After being started in block 901, block 902 obtains the identity of the individual and which ear is being tested. Note, there may be only one individual that is tested. In addition, block 902 obtains the telephone number. Computer 403 can use user interface 404 of Figure 4 to obtain this information. Then, block 903 requests that the individual place the telephone close to the ear.

Next, decision block 904 determines if the telephone is indeed close to the ear. If the answer is no in decision block 904, control is transferred back to block 903. If the answer is yes in decision block 904, control is transferred to block 906. The latter block obtains the echo information by computer 403 utilizing transmitters section 418 before transferring control to decision block 907.

Decision block 907 determines if the echo information obtained by block 906 is valid. If the answer is yes in decision block 907, control is transferred to decision block 914.

Decision block 914 determines if the database is internal or external to the telephone. If the answer is no in decision block 914, block 916 transmits the echo information and the identification of the individual (such as the name of the individual, personnel number of the individual, and telephone number, etc.) to the external database before transferring control to decision block 909. lf the answer in decision block 914 is yes, block 908 stores the echo information in the database before transferring control to decision block 909.

Decision block 909 determines if predefined samples of echo information have already been stored in the database. If the answer is no, control is transferred back to block 906. If the answer in decision block 909 is yes, control is transferred to block 911 and the process is complete.

Returning to decision block 907, if the answer in decision block 907 is no, decision block 912 determines if the invalid number of samples of echo information that have been taken by the telephone exceeds a predefined number. If the answer is no, control is transferred back to block 906. If the answer in decision block 912 is yes, control is transferred to block 913 which signals an error before transferring control to block 911.

Figure 10 illustrates, in flow chart form, the operations performed by block 611 or 711 of Figures 6 or 7, respectively, upon identification of an individual. Decision block 1001 determines if the identified user is authorized to use the telephone. This is particularly important for cellular and mobile telephones. If the answer is no in decision block 1001, the telephone disables itself before returning control either to decision block 602 or 702 of Figure 6 or 7, respectively. If the answer in decision block 1001 is yes, control is transferred to decision block 1003.

Decision block 1003 determines from internally stored data if the identity of the individual is to be transmitted to the endpoint with which the telephone is in communication. If the answer is yes, block 1004 transmits the identity to the endpoint before transferring control to decision block 1006. If the answer in decision block 1003 is no, control is transferred to decision block 1006. If the endpoint is a conferencing system, the conferencing system could display the received identification to the other participants in the conference. If the endpoint is a voice messaging system or an automated attendant system, the endpoint could use the received identification to authorize operations requested from the telephone.

Decision block 1006 determines if the verification is to be transmitted to the switching system to which the telephone is connected. If the answer is yes, block 1007 transmits the identity to the switching system before transferring control to decision block 1008. If the answer in decision block 1006 is no, control is transferred to decision block 1008. The switching system may utilize the received identification to perform billing operations or to generate caller ID information.

Decision block 1008 determines if the identity is to be transmitted to a presence system. If the answer is yes, block 1009 transmits the identity to the present system along with the identification of the telephone which may be the telephone number of the telephone. After execution of block 1009, control is transferred to block 602 or 702 of Figure 6 or 7, respectively. If the answer is no in decision block 1008, control is transferred to block 602 or 702 of Figure 6 or 7, respectively.

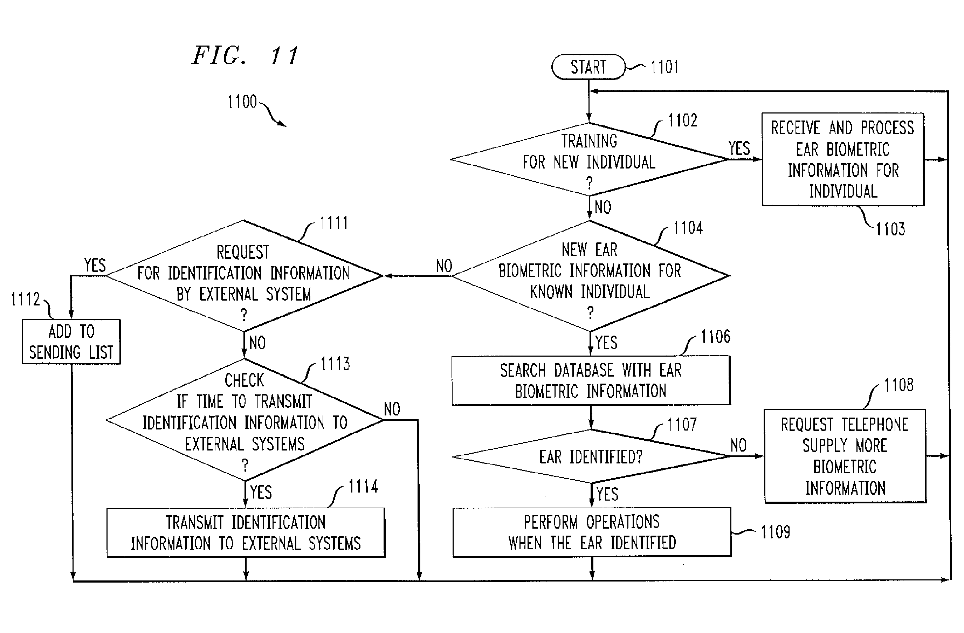

Figure 11 illustrates, in flowchart form, operations 1100 that are performed by an external identification database. After being started in block 1101, decision block 1102 determines if information is being received from a telephone for training the database for a new individual. As was previously noted, the identification information stored within the identification database may also be received from other sources. If the answer is yes in decision block 1102, block 1103 receives and processes the ear biometric information plus information defining the name, telephone number, etc. for the individual before returning control to decision block 1102. If the answer in decision block 1102 is no, control is transferred to decision block 1104. The ear biometric information may be 3-D pictures or echo information.

Decision block 1104 determines if new ear biometric information is being received for a known individuals. If the answer is yes, block 1106 searches database with the ear biometric information before transferring control to decision block 1107. The latter decision block determines if the ear has been identified hence the individual has been identified in block 1106. If the answer is no, block 1108 requests the telephone supplying more ear biometric information before transferring control back to decision block 1102. If the answer is yes in decision block 1107, block 1109 performs the operations that should be performed when an ear is identified.

Returning to decision block 1104, if the answer is no, control is transferred to decision block 1111 which determines if there is a request for identification information by an external system. Such a request could come from systems 101, 102, or 110-113 of Figure 2. If the answer is yes in decision block 1111, block 1112 adds the system to the sending list of information before transferring control back to decision block 1101. Also added to the sending list will be the name of the user, telephone number, etc. if the answer in decision block 1111 is no, control is transferred to decision block 1113.

Decision block 1113 determines if it is time to transmit identification information to the external systems that are in the sending list. If the answer is no, control is transferred back to decision block 1102. If the answer in decision block 1113 is yes, block 1114 transmits the identification information to the external systems in the sending list before transferring control back to decision block 1102.

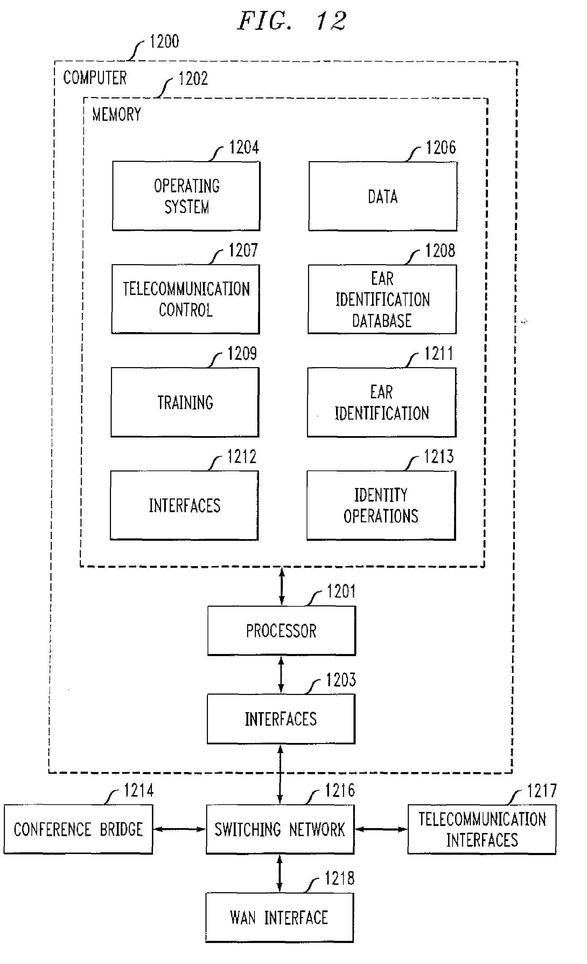

Figure 12 illustrates, in block diagram form, a telecommunication system which could be a system such as wireless system 101 or wired switching system 102. Additionally, if switching network 1216 and telecommunication interfaces 1217 were not present, Figure 12 could be a block diagram of server 117 or identification database 118 if the conference bridge 1214 and telecommunication interfaces 1217 were also not present. Computer 1200 performs the overall control of the system and communicates control information to conference bridge 1214, switching network 1216, telecommunication interfaces 1217 and WAN interface 1218 via interfaces 1203. Also, computer 1200 controls switching network 1216 to set up calls between telecommunication sets connected to telecommunication interfaces 1217 and WAN interface 1218 via WAN 109. Computer 1200 controls conference bridge 1214 by transmission of control messages via interfaces 1203 and switching network 1216. Computer 1200 communicates with telecommunication sets via telecommunications interfaces 1217 and WAN interface 1218.

Within computer 1200, processor 1201 controls these devices via interfaces 1203 by executing routines stored in memory 1202.

Interfaces routine 1212 is executed by processor 1201 to directly control the above noted devices via interfaces 1203 based on decisions made by the other routines stored in memory 1202.

Operating system 1204 provides the overall control of computer 1200 utilizing information stored in data 1206.

Telecommunication control routine 1207 controls the normal telecommunication operations of a telecommunication set utilizing interfaces routine 1212 and information stored in data 1206. Note, if the system illustrated in Figure 12 was an identification database, telecommunication control routine 1207 would be a routine to control the normal operations of a database.

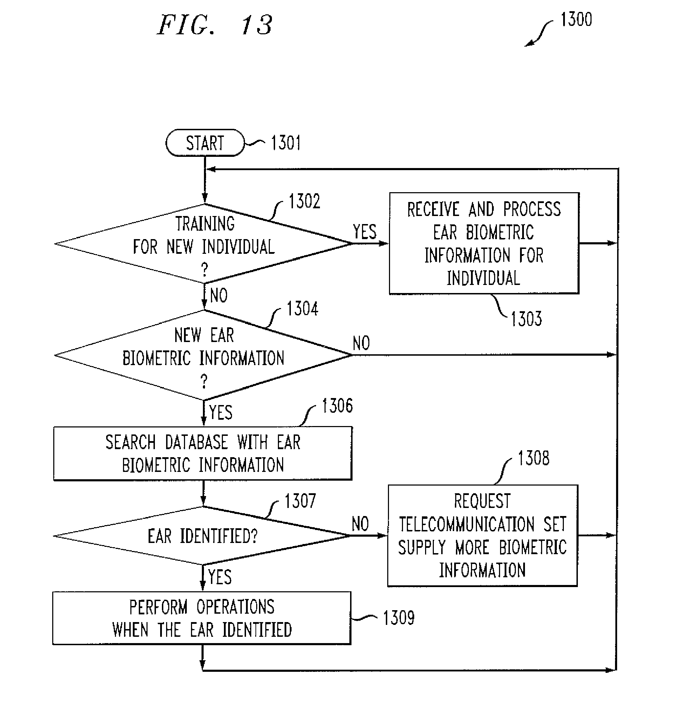

The training operations as described in Figure 13 are performed by training routine 1209. Training routine 1209 stores the identification of ears and individuals in ear identification database 1208 using ear biometric information received from a telecommunication set. One skilled in the art would realize that the information stored in the system could be gathered by other means other than the training operations. For example, the 3-D images could be obtained by the use of dedicated cameras. The echo information could also be obtained by using audio equipment other than telecommunication sets.

Ear identification routine 1211 performs the operations as described with respect to Figure 13. Ear identification routine 1211 utilizes the data stored in the ear identification database 1208 to identify ears. If the individual identification is being performed by an external system, routine 1211 will not be present in memory 1202.

Identity operations 1213 perform operations once the individual using the telephone has been identified as is described with respect to Figure 13.

Figure 13 illustrates, in flowchart form, operations 1300 that are performed by a telecommunication system. After being started in block 1301, decision block 1302 determines if information is being received from a telecommunication set for training the database for a new individual. As was previously noted, the identification information stored within the telecommunication system may also be received from other sources. If the answer is yes in decision block 1302, block 1303 receives and processes the ear biometric information plus information defining the name, telephone number, etc. for the individual before returning control to decision block 1302. If the answer in decision block 1302 is no, control is transferred to decision block 1304. The ear biometric information may be 3-D pictures or echo information.

Decision block 1304 determines if new ear biometric information is being received for a new or existing telecommunication call. If the answer is yes, block 1306 searches database with the ear biometric information before transferring control to decision block 1307. The latter decision block determines if the ear has been identified hence the individual has been identified in block 1306. If the answer is no, block 1308 requests the telecommunication set supplying more ear biometric information before transferring control back to decision block 1302. If the answer is yes in decision block 1307, block 1309 performs the operations that should be performed when an individual is identified by identification of an ear.

Returning to decision block 1304, if the answer is no, control is transferred back to decision block 1301.

When the operations of a computer are implemented in software, it should be noted that the software can be stored on any computer-readable medium for use by or in connection with any computer related system or method. In the context of this document, a computer-readable medium is an electronic, magnetic, optical, or other physical device or means that can contain or store a computer program for use by or in connection with a computer related system or method. The computer can be embodied in any computer-readable medium for use by or in connection with an instruction execution system, apparatus, or device such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. For example, the computer-readable medium can be, but is not limited to, an electronic, magnetic, optical, electromagnetic, infrared, or semiconductor system, apparatus, or device. More specific examples (a non-exhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical).

In an alternative embodiment, where the computer is implemented in hardware, the telephone set, control computer or server can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

## Claims

1. A method for controlling the operations of an audio device (301-313, 401-416), comprising
**CHARACTERIZED IN THAT**
obtaining (604-608, 704-708) by the audio device biometric information about an ear of a user;
identifying (609, 709) the user by processing the biometric information; and
controlling (611, 711) the operation of the audio device in response to the identification of the user.

2. The method of claim 1 wherein the controlling comprises disabling (1002) an operation of the audio device upon the identified user not being authorized to use the audio device.

3. The method of claim 1 wherein the controlling comprises transmitting (1003, 1004) the identification of the user to an endpoint.

4. The method of claim 2 wherein the audio device is a wireless telephone.

5. The method of claim 1 wherein the controlling comprises completing a call by the audio device; and
billing the identified user for the completed call.

6. The method of claim 3 wherein the endpoint is a voice messaging system and the method further comprises authorizing access by the user to the voice messaging system by the voice messaging system in response to the identification of the user.

7. The method of claim 3 wherein the endpoint is one of at least a telecommunication switching system, a telecommunication set, a voice messaging system, a conferencing system, an automatic response system, or a presence system.

8. The method of claim 1 wherein the identifying comprises analyzing the obtained biometric information by the audio device; and
determining the identification of the user from the analyzed obtained biometric information.

9. The method of claim 8 wherein the obtaining comprises obtaining sonic information from an ear canal of the ear of the user;
the analyzing comprises determining physical characteristics of the ear canal based on the sonic information; and
the determining the identification of the user comprises comparing the physical characteristics of the ear canal to physical characteristics of the ear canal information stored in an internal database of the audio device.

10. The method of claim 8 wherein the obtaining comprises obtaining visual information about the ear of the user; and
the determining the identification of the user comprises comparing the visual information of the ear of the user to visual information of ears stored in the external database.

11. The method of claim 1 wherein the controlling comprises transmitting the identification of the user to a conferencing system; and
presenting the identification of the user to the other participants of a conference call each time the identification of the user is transmitted to the conferencing system.

12. An audio device (401-416), comprising:
a transmitter (408) for communicating voice information to a user;
a receiver (409) for receiving voice information from the user;
**CHARACTERIZED IN THAT**
a ultrasonic transmitter (412) for transmitting ultrasonic signals into an ear canal of an ear of the user;
a ultrasonic receiver (414) for receiving reflected ultrasonic signals from the ear canal resulting from the transmitted ultrasonic signals;
a computer (403) for processing the reflected ultrasonic signals from the ear canal to determine the identification of the ear;
the computer responsive to the identification of the ear for identifying the user; and
the computer responsive to the identification of the user for controlling an operation of the audio device.

13. The audio device of claim 12 wherein the controlling comprises the computer disabling the operation of the audio device upon the identified user not being authorized to use the audio device.

14. The method of claim 12 wherein the audio device is one of at least a wired telephone, cellular telephone, mobile telephone, twoway radio, or a telephone headset.

15. The audio device of claim 12 wherein the controlling comprises the computer transmitting the identification of the user to an endpoint.
